# EUROPEAN PATENT APPLICATION

(11) **EP 4 420 758 A1**
(43) Date of publication of application: **28.08.2024**
(21) Application number: 24159789.7
(22) Date of filing: 26.02.2024
(51) Int. Cl.: B01D 53/04

(54) **DEVICE FOR RECIRCULATION AND DEHUMIDIFICATION OF FLUORINATED GAS**

(30) Priority: 27.02.2023 IT 202300003402
(71) Applicant: Synecom S.r.l., 24040 Stezzano (IT)
(72) Inventor: PIROLA, Michele, 24040 Stezzano (BG) (IT); MARGHERITI, Domenico, 24040 Stezzano (BG) (IT); ROSSI, Fabio, 24040 Stezzano (BG) (IT); ROVETTA, Massimo, 24040 Stezzano (BG) (IT); SINGH, Gurjit, 24040 Stezzano (BG) (IT); LODEDO, Sergio, 24040 Stezzano (BG) (IT)
(74) Representative: Karaghiosoff, Giorgio Alessandro

(57) **Abstract**

Scope of the invention is a device for treating fluorinated gases, in particular sulfur hexafluoride, comprising:
an inlet section suitable for receiving the gas to be treated;
an outlet section suitable for conveying the treated gas to the outlet;
a fluid-dynamic circuit which puts the inlet section in communication with the outlet section and comprising a plurality of branches in parallel;
flow cut-off elements that can be controlled via an actuation signal for the closing/opening of said branches of the fluid-dynamic circuit so that the gas in its passage from the inlet section to the outlet section can pass through different paths so as to vary the volume available to the gas inside the circuit depending on the state of actuation of the cut-off elements;
a plurality of filtering units arranged at least partly in the branches of the fluid-dynamic circuit so as to filter the gas coming from the inlet section when said branches of the circuit are opened by the corresponding cut-off elements;
an input to receive information relating to the volume of gas to be treated;
a control unit interfaced to said input and to the flow cut-off elements and programmed to read said input and send actuation commands to the cut-off elements to open/close the branches of the circuit according to the volume of gas to be treated.

## Description

Object of the present invention is a filtering system for fluorinated gases, in particular sulfur hexafluoride (SF₆), used in plant of the most varied types.

The national and community regulations currently in force establish rules in relation to the management and operation of plants and equipment that use considerable quantities of fluorinated greenhouse gases.

These regulations establish provisions regarding the containment, use, recovery and destruction of fluorinated greenhouse gases and related ancillary measures; conditions for placing on the market specific products and equipment that contain or depend on fluorinated greenhouse gases in their operations ; conditions for particular uses of fluorinated greenhouse gases; leak checks of plants and equipment in relation to the fluorinated gases contained therein; drafting of reports containing historical data on the performance of the plant with reference to the stability of the fluorinated gases used, any alarms, maintenance interventions and blockages of the plants.

Fluorinated gases are used, for example, as an insulator in medium/high voltage electrical equipment and in particle accelerators. They are also used in the production of contrast agents for CT and MRI in the medical field as well as in refrigeration systems.

Whatever the use, when subjected to electric arcs or high temperatures, these gases, in particular sulfur hexafluoride, tend to transform, albeit in small quantities, into other gaseous compounds. This is due both to the breakdown of the molecule and, to a greater extent, to the presence of impurities that react with the molecules present in the environment. Impurities are generally caused by poor handling of the gas, in particular during transfer from the cylinders within the plant or due to insufficient vacuum treatment.

To limit the formation of unwanted compounds, it is therefore necessary to reduce the particulates, decomposition gases (such as SO₂ - H₂S - HF) and/or the humidity present in the gas inside the plant, an operation defined in this description also as gas filtering or dialysis.

To this end, it is known to use equipment which provides for the sampling of the gas, the filtering and the reintroduction of the filtered gas into the plant.

When this operation is carried out with the plant running, it is necessary to ensure that the gas is taken without the overall residual volume falling below a certain threshold which the safety systems would interpret as a flaw and, therefore, as an alarm on the level of electrical insulation of the plant.

On the other hand, plants that use fluorinated gases such as sulfur hexafluoride, being of the most varied types, use very different volumes of gas ranging from a few liters or dm³ to several hundred cubic meters. For this reason the aforementioned equipment can only operate on those plants for which they were designed, i.e. they do not have the flexibility that would allow them to operate on plants with different characteristics.

The aim of the present invention is, therefore, to create a device that allows the safe filtration of variable volumes of a fluorinated gas, in particular sulfur hexafluoride, present in a plant of any type while the plant is in operation.

The invention achieves its scope with a device for treating fluorinated gases, in particular sulfur hexafluoride, comprising:
an inlet section suitable for receiving the gas to be treated;
an outlet section suitable for conveying the treated gas to the outlet;
a fluid-dynamic circuit which puts the inlet section in communication with the outlet section and comprising a plurality of branches in parallel;
flow cut-off elements that can be controlled via an actuation signal for the closing/opening of said branches of the fluid-dynamic circuit so that the gas in its passage from the inlet section to the outlet section can pass through different paths so as to vary the volume available to the gas inside the circuit according to the state of actuation of the cut-off elements;
a plurality of filtering units arranged at least partly in the branches of the fluid-dynamic circuit so as to filter the gas coming from the inlet section when said branches of the circuit are opened by the corresponding cut-off elements;
an input to receive information relating to the volume of gas to be treated;
a control unit interfaced to said input and to the flow cut-off elements and programmed to read said input and send actuation commands to the cut-off elements to open/close the branches of the circuit according to the volume of gas to be treated.

A compression unit, such as for example a 4.5 Nm³/h dry compressor, controlled by the control unit and/or by automatic pressure detection devices, arranged in the circuit downstream of the filtering units is used to compress the gas filtered towards the outlet section while the suction of the gas from the inlet section occurs naturally due to the pressure difference between the inlet section and the filtering branches of the fluid-dynamic circuit.

Only the pressure difference and the set gas volume of the filter device are responsible for the suction flow. This directly affects the safety of the plant. In fact, since there are no active suction units, but only a passive withdrawal of a variable quantity of gas, it is not necessary to monitor the operation of these units to avoid situations in which, due to a malfunction, too high a quantity of gas is withdrawn which could trigger system alarms.

The device control unit can be programmed to work in an intermittent mode suitable for managing compartments containing the gas to be treated equipped with a single port for entry and exit. In this case, controllable inlet and outlet valves allow the gas flow to be directed alternatively from the compartment towards the inlet section or from the outlet section towards the compartment.

When the compartment is equipped with two ports, one inlet and one outlet, the device control unit can be set to operate in a recirculation mode which provides a continuous flow of gas from the compartment towards the inlet section and from the outlet section towards the sector.

The control unit can advantageously be programmed to carry out measurements relating to the degree of saturation of the filters or operation tests of the automatic piloting pressure switches of the compressor.

Further characteristics and improvements are the subject of the dependent claims.

The characteristics of the invention and the advantages deriving from it will result more clearly from the following detailed description of the attached figures, in which:
The fig. 1 shows a block diagram of a device according to an embodiment of the invention.
The fig. 2 shows the detailed block diagram of a fluid-dynamic circuit that can be used in a device according to the invention.
The fig. 3 shows a view of the device assembled on a mobile unit on wheels.
The fig. 4 shows the control panel of the device in the previous figure.

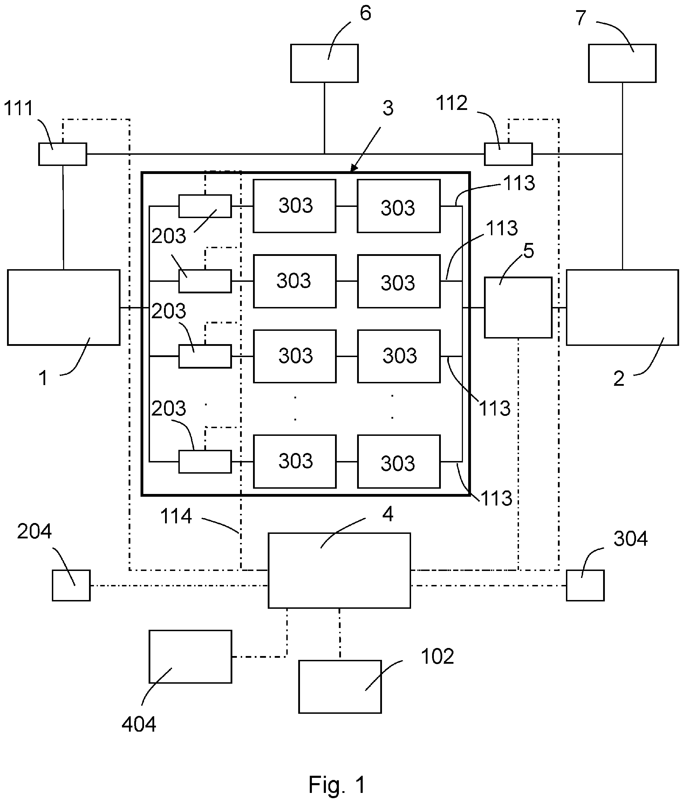

With reference to the block diagram of Fig. 1, a device for treating fluorinated gases, in particular sulfur hexafluoride, according to an embodiment of the invention comprises:
an inlet section 1 suitable for receiving the gas to be treated via a connection interface with a compartment of a generic plant that uses said gas for the activities prescribed therein;
an outlet section 2 suitable for conveying the treated gas towards the same or another compartment of the plant using the same or a different interface connection between the device and the plant used for the gas inlet;
a fluid dynamic circuit 3 which puts the inlet section 1 in communication with the outlet section 2.

The fluid dynamic circuit 3 includes a plurality of parallel branches 113 on which filtering units 303 are placed, in particular molecular sieving filters. On each branch 113 there can be only one filter or several filters in series, for example two, or no filter. The branches and filters associated with them may vary depending on the volumes of gas that the device is designed to treat.

On each branch 113 there are flow cut-off elements 203, such as solenoid valves, which can be controlled via an actuation signal 114. In this way it is possible to insert or exclude a corresponding filter or a corresponding battery of filters from the circuit, thus varying the volume of gas which can be handled by the device.

The actuation signal 114 is provided by a control unit 4 which underlies the operation of the device on the basis, for example, of information relating to the volume of gas to be treated received at the input. This input, identified with reference 204 in Fig. 1, is a value that can be set by the user, for example via a graphic interface controlled by the control unit 4, or via a selector or one or more buttons.

The control unit 4 includes a microprocessor or microcontroller processing unit which can be made up of specific hardware or generic computer hardware that executes a specific program in which the instructions are encoded to configure the said hardware to operate according to the expected methods.

In the diagram of Fig. 1 there is also a compression unit 5, which can be controlled by the control unit 4 or by one or more pressure switches present in the circuit and arranged downstream of the filtering units 303 to compress the filtered gas towards the outlet section 2 and, therefore, in the compartment from which it was taken.

The suction of the gas from the inlet section 1 does not require, however, any active organ as it occurs naturally due to the pressure difference between the inlet section 1 and the filtering branches 113 of the fluid-dynamic circuit even if it is not excluded that a motorized suction unit can also be used to optimize the extraction of gas from the compartment.

The control unit 4 can advantageously be interfaced with a control panel 404 and a display 102 for the user interface and with sensors to monitor the operation of the device. Such sensors are generically indicated in Fig. 1 with the reference 304 and can include, for example, pressure, flow, temperature, absorbed electrical power sensors and the like.

The output values from the sensors 304 are read, possibly processed by the control unit 4 and shown in the form of parameters varying over time on the display 102. Such parameters, for example, include:
- Pressure;
- Pressure compensated;
- Temperature;
- Humidity ppm;
- Humidity dew point;
- Level/concentration of gases such as SO₂, H₂F, HF;
- Level/concentration of other gases.

The device can be interfaced with the compartment containing the gas to be treated via one or two automatic valves 6, 7, in particular with molecular seal.

If the compartment containing the gas to be treated has a single inlet/outlet port, only valve 6 is used for the interface with the device. In this case the aspirated gas and the treated gas flow onto a section of the circuit in common between inlet section 1 and outlet section 2 via an inlet solenoid valve 111 and an outlet solenoid valve 112 on which the control unit 4 acts to ensure that simultaneous opening does not occur. The operating mode, in fact, can only be intermittent as the aspiration must take place in a different phase from the reintroduction.

If the compartment containing the gas to be treated has separate inlet and outlet ports, the device can operate in recirculation mode in which the gas is aspirated by valve 6 placed in communication with inlet section 1 and reintroduced into the compartment through valve 7 in direct communication with the outlet section 2. To make this possible, the control unit acts on the actuation signal in such a way as to always keep the inlet valve 111 open and the outlet valve 112 always closed.

The operating scheme can be widely varied. For example, it is possible to provide for the use of a two-way outlet valve 112 so as to direct the gas coming from the outlet section 2 towards the first 6 or second 7 molecular seal valve 6 or to provide for the use of a second outlet valve which acts on the section of circuit between outlet section 2 and outlet molecular seal valve 7 which prevents/allows the flow of gas towards this valve independently.

The fluid dynamic circuit as a whole can be equipped with additional components that optimize its operation and increase safety.

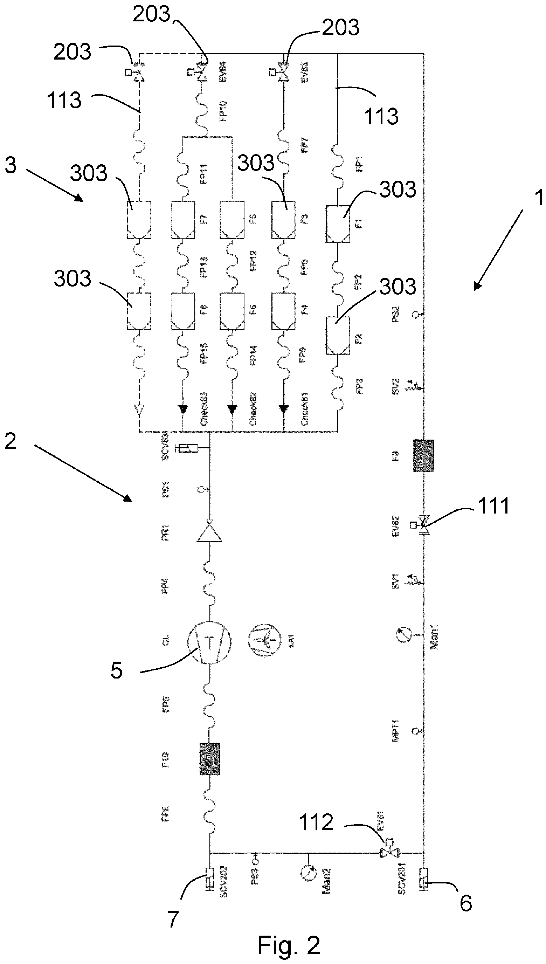

In the specific configuration shown in Fig. 2, in addition to the components already described with reference to Fig. 1, there are:
dust/particulate filters F9 and F10 and high pressure inlet/outlet pressure gauges Man1, Man2 provided in the inlet section 1 and in the outlet section 2;
safety valves (certified by Italian National Institute for Insurance against Accidents at Work) SV1 compartment and SV2 filters in inlet section 1;
an input MPT1 humidity sensor;
various pressure switches PS1, PS2, PS3 for automatic control of the device;
Check81, Check82, Check83 check valves exiting filter branches 3;
a DN8 molecular seal SCV83 valve for a possible auxiliary tank;
a PR1 pressure reducer;
a cooling extractor for compressor and filters;

The branches of the filtering circuit 3 in the configuration shown in the figure have a particular structure: they are four plus one additional indicated in dotted lines, one of which has no inlet solenoid valve and two of which driven in parallel by the same EV84 solenoid valve. The filters are eight, in series of two by two and operate, in an integrated manner, both the dehumidification and the filtering of acid gases and/or particulates . Obviously the number of branches, the type of connection between them, the number and type of filtering units present on each branch can vary widely depending on the characteristics of the plants, in particular the volumes of gas to be treated, at which the device it is intended to interface.

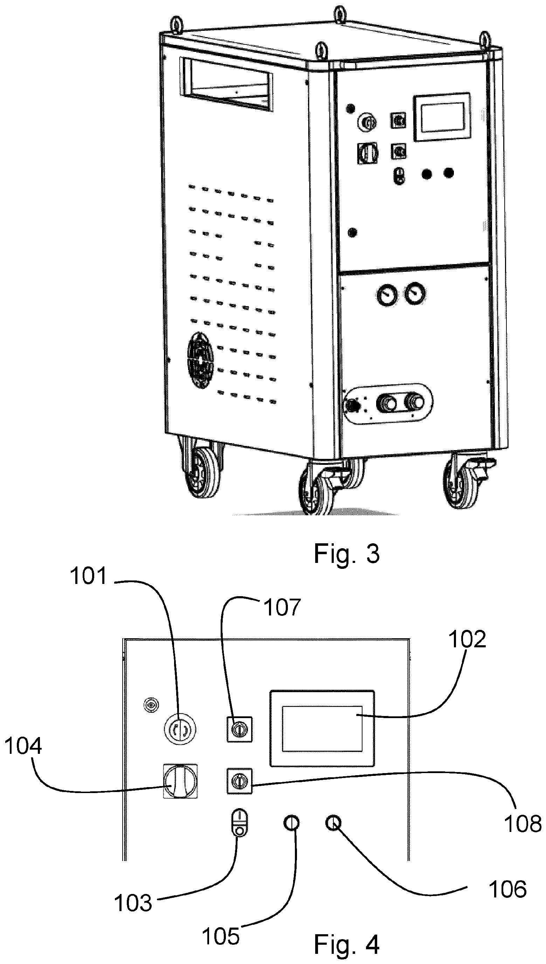

With reference to Fig. 3, the device for treating fluorinated gases, in particular sulfur hexafluoride, according to an embodiment of the invention is preferably a mobile unit on wheels, in particular made of vulcanized rubber with a turntable support and brake, consisting of a compact frame which houses the components necessary for operation inside. The covering panels mainly perform an aesthetic function and protection from dirt and other pollutants, as they have no moving elements directly accessible by the operator.

The device has a gas pipe connection station for connection to the automatic gas inlet/outlet valves, on the front part of the machine.

As for the commands, as shown in Fig. 4, these include:
an emergency stop button 101 red on yellow background which generates an emergency stop of the machinery;
a display 102 for viewing the vacuum level during gas recovery;
a function start and stop pushbutton panel 103 with machine "running" indicator light;
a padlockable disconnect switch 104 for the electrical power supply;
a light 105 indicating device status as "switched off" or "Stopped";
an fault warning light 106;
a function selector 107 with key;
a key start enable selector 108.

The procedures are automated, so the operator's intervention is generally limited to the connection of the auxiliary compartment/tank and the controls on the control panel on the machine.

The configuration of the fluid dynamic circuit shown in Fig. 2 has been designed to operate according to the following operating modes:

### Intermittent 100 ÷ 300 l

This function, which uses 2 of the 8 filters, is suitable for treating in-service compartments with a volume between 100 and 300 litres, such as 132 - 245 kV AIS systems.

The steps to follow to activate this mode are:
- Connect valve 6 to the compartment with the gas to be treated, via a vacuum tube or tube containing SF6 gas.
- Using selector 107, select the "INTERMITTENT AIS 132-245 kV" function.
- Using selector 108 enable starting.
- Using pushbutton 103 start the operation. The SF₆ gas enters the filters 303 until the pressure inside them reaches 3 barg. Once this threshold is reached, compressor 5 is started and transfers the gas from the filters to the compartment until the pressure inside the filters drops to 0.4 barg . The cycle is repeated automatically.
- Display 102 shows the parameters measured by the multiparameter sensor, positioned near valve 6.
- When the humidity drops below the value prescribed by the manufacturer and/or by the reference standards, and remains below this threshold for the entire duration of the cycle, it is possible to stop the operations by pressing the stop button of the push-button panel 103. Once the stop button is pressed, the "off" light 105 lights up, the machine finishes the cycle in progress, restoring the initial pressure of the compartment.
- Disconnect the hose from the compartment.
- In order to know the real conditions of the compartment it is necessary to carry out a gas analysis, using an analyzer, directly on the compartment.

### Intermittent 300 ÷ 600 l

This function, which uses 4 of the 8 filters, is suitable for treating in-service compartments with a volume between 300 and 600 litres, such as 245 - 420 kV AIS systems.

The steps to follow to activate this mode are:
- Connect valve 6 to the compartment to be treated, via a vacuum tube or tube containing SF₆ gas.
- Using selector 107, select the "INTERMITTENT AIS 245 - 420 kV" function.
- Using selector 108 enable starting.
- Using pushbutton 103 start the function. The SF₆gas enters the filters until the pressure inside them reaches 3 barg . Once this threshold is reached, compressor 5 is started and transfers the gas from the filters 303 to the compartment, until the pressure inside the filters drops to 0.4 barg. The cycle is repeated automatically.
- Display 102 shows the parameters measured by the multiparameter sensor 304, positioned near valve 6.
- When the humidity drops below the value prescribed by the manufacturer and/or by the reference standards, and remains below this threshold for the entire duration of the cycle, it is possible to stop the function by pressing the stop button of the push-button panel 103. Once the stop button is pressed, the "off" light 105 lights up, the machine finishes the cycle in progress, restoring the initial pressure of the compartment.
- Disconnect the hose from the compartment.
- In order to know the real conditions of the compartment it is necessary to carry out a gas analysis, using an analyzer, directly on the compartment.

### Intermittent > 600 1

This function, which uses all 8 filters, is suitable for treating in-service compartments with a volume greater than 600 litres, such as single access valve GIS systems, or out-of-service compartments of any volume.

The steps to follow to activate this mode are:
- Connect valve 6 to the compartment to be treated, via a vacuum tube or tube containing SF₆gas.
- Using selector 107, select the "INTERMITTENT GIS 1 ACCESS VALVE" function.
- Using selector 108 enable starting.
- Using pushbutton 103 start the function. The SF₆gas enters the filters until the pressure inside them reaches 3 barg . Once this threshold is reached, the compressor is started which transfers the gas from the filters to the compartment, until the pressure inside the filters drops to 0.4 barg. The cycle is repeated automatically.
- Display 102 shows the parameters measured by the multiparameter sensor, positioned near valve 6.
- When the humidity drops below the value prescribed by the manufacturer and/or by the reference standards, and remains below this threshold for the entire duration of the cycle, it is possible to stop the function by pressing the stop button of the push-button panel 103. Once the stop button is pressed, the "off" light 105 lights up, the machine finishes the cycle in progress, restoring the initial pressure of the compartment.
- Disconnect the hose from the compartment.
- In order to know the real conditions of the compartment it is necessary to carry out a gas analysis, using an analyzer, directly on the compartment.

### Recirculation

This function, which uses all 8 filters, is suitable for treating in-service compartments with a volume greater than 600 litres, such as GIS systems with two access valves, or out-of-service compartments of any volume, with two access valves.

The steps to follow to activate this mode are:
- Connect valve 6 to one of the valves of the compartment to be treated, via a vacuum tube or tube containing SF₆gas.
- Connect valve 7 to the other of the two valves of the compartment to be treated, via a vacuum tube or tube containing SF₆gas (the two valves of the compartment to be connected to must be as far apart as possible).
- Using selector 107, select the "GIS RECIRCULATION 2 ACCESS VALVES" function.
- Use selector 108 to enable starting.
- Use the push button 103 to start the function. The compressor 5 makes the SF₆ gas flow through the filters 303 in a continuous recirculation.
- Display 102 shows the parameters measured by the multiparameter sensor 304, positioned near valve 6.
- When the humidity drops below the value prescribed by the manufacturer and/or the reference standard, and remains stable below this threshold, it is possible to stop the function by pressing the stop button on the push button panel 103. Once the stop button is pressed, the "off" light 105 lights up, the machine finishes the cycle in progress, restoring the initial pressure of the compartment.
- Disconnect the hoses from the compartment.
- In order to know the real conditions of the compartment it is necessary to carry out a gas analysis, using an analyzer, directly on the compartment.

### Check filter saturation status

The molecular sieves inside the filters can become saturated more or less quickly depending on the quantity and quality of the gas treated. To find out the degree of saturation of the filters it is possible to proceed as follows:
- Connect valve 6 to valve 7 via a vacuum tube or tube containing SF6 gas.
- Using selector 107, select the "GIS RECIRCULATION 2 ACCESS VALVES" function.
- Using selector 108 enable starting.
- Using pushbutton 103 start the function. Compressor 5 makes the SF₆ gas flow through the filters in a continuous recirculation.
- The display 102, among the displayed parameters, shows the gas humidity, in the form of ppmv or in the form of dew point. The measured value will assume a decreasing trend, until it stabilizes around a certain value after a few minutes. This value represents the degree of saturation of the filters.
- Using selector 108, stop the operations.

### Check pressure switches

Before using the machine, following a long period of inactivity, it is good practice to check its operation and in particular the operation of the pressure switches that control the machine automatically.

To this end, the following procedure can be performed:
- Connect valve 6 to a cylinder containing SF₆ gas with a reducer set at 5 bars.
- Using selector 107, select the "GIS RECIRCULATION 2 ACCESS VALVES" function.
- Using selector 108 enable starting.
- Using pushbutton 103 start the function.
- As soon as the pressure inside the filters has reached 4 barg the pressure switch will turn on the compressor. Once the internal pressure of 8 bar is reached, the compressor will stop automatically.
- Close and disconnect the cylinder with the reducer from valve 6.
- Connect an empty cylinder to valve 7.
- Open the cylinder connected to valve 7.
- Start the Recirculation function.
- Stop the Recirculation function when the internal pressure of 0.5 mbar is reached.
- Close and disconnect the cylinder from valve 7.
- Equalize the internal pressures in the machinery.

### Gas discharge

The control unit 4 is configured to carry out a gas discharge cycle so as to bring the pressure inside the fluid-dynamic circuit to a value lower than 0.5 bar by activating the compression unit 5 with the compartment disconnected with the inlet valve 111 closed. This allows the device to be placed in a safe condition for transport according to current regulations.

The invention also concerns a plant using fluorinated gases, comprising a compartment within which said fluorinated gases are collected, and having the characteristic of being provided in combination with a device according to the invention for the treatment of gases when the plant is in operation. The plant compartment includes at least one gas inlet/outlet port connected to the first valve 6 of the device which is configured to operate in intermittent mode with suction and reintroduction of the treated gas through said at least one port 6 or to operate in recirculation mode with suction and reintroduction of the treated gas through separate ports 6, 7.

The plant advantageously includes a safety system capable of detecting when the volume of gas in the compartment falls below a certain alarm threshold. The flow cut-off elements 203 of the device are correspondingly controlled according to the volume of gas to be sucked from the mixture so that the safety system remains inactive.

## Claims

1. Device for treating fluorinated gases, in particular sulfur hexafluoride, comprising:
an inlet section (1) adapted to receive the gas to be treated;
an outlet section (2) suitable for conveying the treated gas to the outlet;
a fluid dynamic circuit (3) which puts the inlet section (1) in communication with the outlet section (2) and comprising a plurality of branches in parallel (113) ;
flow cut-off elements (203) which can be controlled via an actuation signal (114) for closing/opening said branches (113) of the fluid dynamic circuit so that the gas in its passage from the inlet section (1) to the outlet section (2) can cross different paths so as to vary the available volume of the gas inside the circuit according to the state of actuation of the cut-off elements (203);
a plurality of filtering units (303) arranged at least partially in the branches (113) of the fluid dynamic circuit so as to filter the gas coming from the inlet section (1) when said branches (113) of the circuit are opened by the corresponding cut-off elements (203);
an input (204) for receiving information relating to the volume of gas to be treated;
a control unit (4) interfaced to said input (204) and to the flow cut-off elements (203) and programmed to read said input (204) and sending actuation controls to the cut-off elements (203) to open/close the branches (113) of the circuit according to the volume of gas to be treated.

2. Device according to claim 1, wherein there is a compression unit (5) which can be controlled by the control unit (4) and/or by automatic pressure detection devices, said compression unit (5) being arranged in the circuit downstream of the filtering units (303) to compress the filtered gas towards the outlet section (2), the gas suction from the inlet section (1) occurring naturally due to the effect of the pressure difference between the inlet section (1) and filtering branches (113) of the fluid dynamic circuit.

3. Device according to claim 1 or 2, wherein there is a first valve (6), in particular with a molecular seal, for the interface of the device with the compartment containing the gas to be treated, said first valve (6) acting on a section of the circuit in fluid dynamic connection with the inlet section (1) and the outlet section (2) by means, respectively, of an inlet valve (111) and an outlet valve (112) which can be controlled by the control unit (4).

4. Device according to claim 3, wherein the control unit (4) is configured to operate in an intermittent state, which intermittent state provides for allowing, by opening the inlet valve (111), the entry of gas from the first valve (6) in the inlet section (1) when the outlet of the treated gas from the outlet section (2) is prevented, by closing the outlet valve (112), and vice versa to prevent the inlet of the gas to be treated, by closing the inlet valve (111), when the outlet of the treated gas towards the first valve (6) is allowed, by opening the outlet valve (112), so as to exploit the first valve (6) in a bidirectional way, i.e. both for the inlet of the gas to be treated and the outlet of the treated gas.

5. Device according to claim 3 or 4, wherein there is a second valve (7), in particular with a molecular seal, for the interface of the device with the compartment containing the gas to be treated, wherein said second valve (7) is arranged upstream of the outlet valve (112) to allow direct outlet of the treated gas from the outlet section (2) to the compartment via the second valve (7), the control unit (4) being configured to operate in a recirculation state, which recirculation state provides for allowing, by opening the inlet valve (111), the inlet of gas from the first valve (6) into the inlet section (1) and the outlet of the treated gas from the outlet section (2) to the second valve (7), by closing the outlet valve (112).

6. Device according to one or more of the preceding claims 2 to 5, wherein the control unit (4) is configured to perform a gas discharge cycle so as to bring the pressure inside the circuit to a value lower than 0.5 bar by actuating the compression unit (5) with compartment disconnected with inlet valve (111) closed.

7. Device according to one or more of the preceding claims, wherein the filtering units (303) comprise molecular sieving filters arranged in the branches (113) of the fluid dynamic circuit individually or in banks of two or more units in series and/or in series.

8. Device according to one or more of the preceding claims, **characterized in that** it is a transportable wheeled device.

9. Device according to one or more of the preceding claims, wherein there are one or more automatic devices, such as for example pressure switches, which send on/off controls to the compression unit (5) according to the pressure detected in one or more parts of the fluid dynamic circuit and/or of the inlet section and/or of the outlet section.

10. Device according to claim 9, wherein the automatic device or devices are such as to activate the compression unit (5) when the pressure inside the fluid-dynamic circuit reaches 4 bar and to deactivate the same compression unit (5) when the pressure inside of the fluid dynamic circuit reaches 8 bar.

11. Device according to one or more of the preceding claims, wherein the control unit (4) is configured to check the saturation level of the filtering units (303) by reading the humidity of the gas measured by a humidity sensor (304) interfaced to said control unit (4) and showing on a display (102) the value measured as the time varies with the first valve (6) and second valve (7) connected to each other via a connecting pipe.

12. Plant using fluorinated gases, comprising a compartment within which said fluorinated gases are collected, **characterized in that** it comprises a device according to one or more of the preceding claims 4 to 11 for the treatment of gases with the plant in operation, the compartment comprising at least one door gas inlet/outlet connected to the first valve (6) of the device, which device being configured to operate in intermittent state with suction and reintroduction of the treated gas via said at least one port (6) or to operate in recirculation state with suction and reintroduction of the treated gas via separate ports (6, 7).

13. Plant according to claim 12, comprising a safety system capable of detecting when the volume of gas in the compartment drops below a determined alarm threshold, the flow cut-off elements (203) of the device being controlled according to the volume of gas to be aspirated from the compartment so that the security system remains inactive.
